# EUROPÄISCHE PATENTSCHRIFT

(11) **EP 3 120 043 B1**
(45) Veröffentlichungstag und Bekanntmachung des Hinweises auf die Patenterteilung: **21.08.2019**
(21) Anmeldenummer: 15709879.9
(22) Anmeldetag: 06.03.2015
(51) Int. Cl.: F16G 13/16, H02G 3/04, H02G 11/00

(54) **ENERGIEFÜHRUNGSKETTE**
DRAG CHAIN
CHAÎNE DE GUIDAGE D'ÉNERGIE

(30) Priorität: 20.03.2014 DE 202014101274 U
(43) Veröffentlichungstag der Anmeldung: 25.01.2017
(73) Patentinhaber: Igus GmbH, 51127 Köln (DE)
(72) Erfinder: JAEKER, Thilo-Alexander, 53757 Sankt Augustin (DE); BARTEN, Dominik, 53340 Meckenheim (DE); DOMMNIK, Jörg, 53819 Neunkirchen-Seelscheid (DE)
(74) Vertreter: Lippert Stachow Patentanwälte Rechtsanwälte
(86) Internationale Anmeldenummer: PCT/EP2015/054765
(87) Internationale Veröffentlichungsnummer: WO 2015/139973

(56) Entgegenhaltungen:
- CH-A2- 704 643
- DE-A1-102008 015 954
- JP-A- 2013 034 327

## Beschreibung

Die Erfindung betrifft eine Energieführungskette zur Führung von Kabeln, Schläuchen und dergleichen zwischen zwei relativ zueinander beweglichen Anschlussstellen, bestehend aus einer Mehrzahl von gelenkig miteinander verbundenen, aus Kunststoff gefertigten Kettengliedern, die je eine Bodenwand, sich daran anschließende, gegenüberliegende Seitenwände und eine Deckelwand aufweisen, wobei die Deckelwand abnehmbar mit den Seitenwänden verbunden bzw. verbindbar ist, die Seitenwände jeweils einen Gelenkzapfen und eine Gelenköffnung zur gelenkigen Verbindung benachbarter Kettenglieder aufweisen, der Verschwenkwinkel in beiden Verschwenkrichtungen durch Anschläge begrenzt ist, die Deckelwand auf jeder Seite mindestens je eine Befestigungslasche aufweist, die Befestigungslaschen die Seitenwände an deren Außenflächen übergreifen, an den den Außenflächen der Seitenwände zugewandten Innenseiten der Befestigungslaschen Rastelemente vorgesehen sind und an den Außenflächen der Seitenwände Gegenrastelemente ausgebildet sind, die mit den Rastelementen der Befestigungslaschen zusammenwirken.

Bei einer bekannten Energieführungskette der genannten Art (DE 10 2008 015 954 A1) bestehen die Deckelwände der einzelnen Kettenglieder aus relativ schmal ausgebildeten Bügeln und dienen lediglich dazu, die Kabel, Schläuche und dergleichen in der Energieführungskette zu halten. Sie dienen nicht dazu, den Innenraum der Energieführungskette nach außen hermetisch abzuschließen, um das Eindringen von Fremdkörpern zu verhindern. Ferner weisen die Bügel nur auf einer Seite ein Scharnierende auf, so dass die Bügel nur nach einer Seite geöffnet werden können.

Eine andere bekannte Energieführungskette (JP 2013-034327 A) weist ebenfalls lediglich in Abständen angeordnete Haltebügel auf, die den Innenraum nicht nach außen hin abschließen. Scharnierverbindungen sind an den Bügelenden nicht vorhanden.

Ausgehend von diesem Stand der Technik liegt die Aufgabe zugrunde, unter Beibehaltung der Vorteile des Standes der Technik den Schutz des Innenraums der Energieführungskette noch weiter zu sichern und die Handhabung beim Öffnen und Schließen der Energieführungskette zu erleichtern.

Erfindungsgemäß wird diese Aufgabe dadurch gelöst, dass die Deckelwände, Seitenwände und Bodenwände benachbarter Kettenglieder sich über den gesamten Verschwenkwinkel gegenseitig überlappen, dass die Rastelemente und Gegenrastelemente auf beiden Seiten der Energieführungskette ein Scharnier bilden, dass die Rastverbindung zwischen den Seitenwänden und der Deckelwand in einem zurückversetzten Bereich der Außenfläche der jeweiligen Seitenwand ausgebildet ist und dass der zurückversetzte Bereich der jeweiligen Seitenwand so bemessen ist, dass die Außenseite der Befestigungslasche im eingeschnappten Zustand der Rastverbindung bündig mit der Außenfläche der jeweiligen Seitenwand abschließt.

Durch diese Konstruktion, bei der die Befestigungslaschen der Deckelwände die Seitenwände außen dicht übergreifen, wird ein optimaler Schutz des Innenraums gegen eindringende Fremdkörper gewährleistet, wobei gleichzeitig der konstruktive Aufwand äußerst gering ist. Ferner kann aufgrund der Tatsache, dass die Rastelemente und Gegenrastelemente auf beiden Seiten der Energieführungskette je ein Scharnier bilden, die Energieführungskette leicht nach beiden Seiten hin geöffnet und geschlossen werden. Darüber hinaus ist die äußere Kontur dadurch optimal gestaltet, dass die Außenseite der Befestigungslasche im eingeschnappten Zustand der Rastverbindung bündig mit der Außenfläche der jeweiligen Seitenwand abschließt.

Vorzugsweise sind die an den Innenflächen der Befestigungslaschen vorgesehenen Rastelemente als nach innen gegen die Seitenwände gerichtete Vorsprünge ausgebildet, während die an den Außenflächen der Seitenwände angeordneten Gegenrastelemente die Form vorspringender Rastnasen aufweisen, wobei die Rastverbindung dadurch entsteht, dass die Vorsprünge der Befestigungslaschen unter leichter elastischer Verformung der zusammenwirkenden Bauteile über die Rastnasen schnappen.

Aufgrund der erfindungsgemäßen Merkmale ist es möglich, auf sehr einfache Weise eine konstruktive Ausgestaltung zu erzeugen, bei der die Rastverbindungen auf beiden Seiten nach Art eines Scharniers funktionieren. Dies wird vorteilhafterweise dadurch erreicht, dass die an den Befestigungslaschen vorgesehenen Vorsprünge an den unteren Enden der Befestigungslaschen angeordnet und kreiszylindrisch ausgebildet sind, dass unterhalb der an den Außenflächen der Seitenwände vorgesehenen Rastnasen nach außen offene hohlzylindrische Aufnahmeräume vorgesehen sind, deren Innendurchmesser dem Außendurchmesser der kreiszylindrischen Vorsprünge entspricht, und dass die Vorsprünge im eingeschnappten Zustand der entsprechenden Deckelwand nach Art eines Scharniers in den hohlzylindrischen Aufnahmeräumen der Seitenwände gelagert sind.

Eine solche Verbindung kann als einfache Rastverbindung ausgeführt sein, bei der die Deckelwand einfach auf die oberen Enden der Seitenwände aufgesetzt wird und dort einrastet.

Bei der Scharnierkonstruktion ist der äußere Öffnungsbereich der Aufnahmeräume zweckmäßig geringfügig kleiner gewählt als der Durchmesser der kreiszylindrischen Vorsprünge, so dass auf beiden Seiten der Deckelwand ein zuverlässiges Scharnier entsteht und die Deckelwand wahlweise nach beiden Seiten aufgeklappt werden kann, ohne dass die Deckelwand von der Energieführungskette abgenommen werden muss.

Bei einer bevorzugten Ausführungsform der Erfindung weisen die an den Seitenwänden vorgesehenen Rastnasen in ihrem mittleren Bereich eine Unterbrechung auf, während oberhalb der an der Deckelwand angeordneten kreiszylindrischen Vorsprünge eine Rippe ausgebildet ist, wobei die Rippe im eingerasteten Zustand der Deckelwand formschlüssig in die jeweilige Unterbrechung der Rastnase eingreift. Durch diese Maßnahme wird eine zusätzliche Sicherung der Rastverbindung gegen unbeabsichtigte Querverschiebungen erzeugt.

Um ein zuverlässiges Einrasten der Befestigungslaschen zu erzielen, können diese mit seitlichen Schrägen versehen sein, die beim Schließen der Deckelwand mit an den Seitenwänden vorgesehenen Einführschrägen zusammenwirken.

Um die Rastverbindungen bequem lösen zu können, kann etwa im mittleren Bereich der an den Rastlaschen angeordneten kreiszylindrischen Vorsprünge eine Ausnehmung von mindestens der Breite des Arbeitsendes eines Schraubendrehers vorgesehen sein. Es ist dann ohne weiteres möglich, durch Einsetzen eines Schraubendrehers oder eines anderen geeigneten Werkzeugs die entsprechende Rastverbindung aufzuhebeln, so dass die Deckelwand jeweils nach der gewünschten Seite aufgeklappt oder gänzlich abgenommen werden kann.

Alternativ oder zusätzlich kann an dem unteren Rand des nach außen offenen Bereichs des hohlzylindrischen Aufnahmeraums ebenfalls eine Ausnehmung von mindestens der Breite des Arbeitsendes eines Schraubendrehers vorgesehen sein.

Die an die Befestigungslaschen angrenzenden seitlichen Ränder der Deckelwand schließen vorzugsweise außen bündig mit der Außenfläche der Seitenwand ab, so dass ein glatter seitlicher Abschluss entsteht.

Bei einer bevorzugten Ausführungsform der Erfindung können die sich an die Befestigungslaschen anschließenden seitlichen Ränder der Deckelwand einen nach unten gerichteten Flansch aufweisen, wobei der Flansch über seine Länge mit einer Abschrägung versehen ist und wobei an den oberen Kanten der Seitenwände eine entsprechende Gegenschräge ausgebildet ist, an der die entsprechende Abschrägung der Deckelwand im eingerasteten Zustand bündig anliegt. Diese Abschrägungen und Gegenschrägen dienen zur Zentrierung der Deckelwand auf den Seitenwänden sowie auch zur zuverlässigen Abdichtung des Innenraums.

Die Erfindung ist in der Zeichnung beispielhaft dargestellt und im Nachfolgenden im Einzelnen anhand der Zeichnung beschrieben.

Es zeigen:
- Fig. 1: ein einzelnes Kettenglied der erfindungsgemäßen Energieführungskette,
- Fig. 2: einen Schnitt entlang der Linie A-A aus Fig. 1,
- Fig. 3: in vergrößerter Darstellung den Ausschnitt B aus Fig. 2,
- Fig. 4: in verkleinerter Darstellung das Kettenglied gemäß Fig. 1 mit aufgeklappter Deckelwand,
- Fig. 5: einen Schnitt entlang der Linie C - C aus Fig. 4,
- Fig. 6: das Kettenglied gemäß Fig. 1 und Fig. 4 in perspektivischer Darstellung ohne die Deckelwand,
- Fig. 7: eine Stirnansicht des Kettengliedes gemäß Fig. 6,
- Fig. 8: eine Seitenansicht des Kettengliedes gemäß Fig. 6 ohne Deckelwand,
- Fig. 9: einen Schnitt entlang der Linie D - D aus Fig. 8,
- Fig. 10: die zu dem Kettenglied gemäß Fig. 1 gehörende Deckelwand in dem gleichen Maßstab wie Fig. 1,
- Fig. 11: eine Stirnansicht der Deckelwand gemäß Fig. 10 und

- Fig. 12: eine Seitenansicht der Deckelwand gemäß Fig. 10.

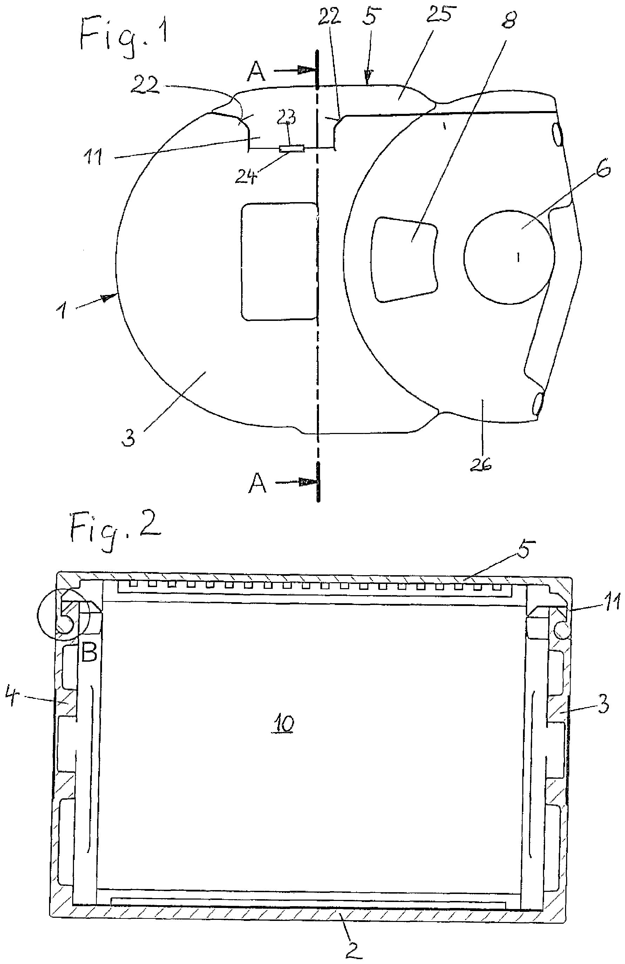

In den Figuren 1 bis 12 ist ein Ausführungsbeispiel der erfindungsgemäßen Energieführungskette dargestellt, die zur Führung von Kabeln, Schläuchen und dergleichen zwischen zwei relativ zueinander beweglichen Anschlussstellen dienen. Eine solche Energieführungskette besteht aus einer Mehrzahl von gelenkig miteinander verbundenen, aus Kunststoff gefertigten, rohrförmigen Kettengliedern 1, die je eine Bodenwand 2, sich daran anschließende, gegenüberliegende Seitenwände 3 und 4 sowie eine Deckelwand 5 aufweisen.

Bei dem in der Zeichnung dargestellten Ausführungsbeispiel sind die Bodenwand 2 sowie die Seitenwände 3 und 4 einstückig ausgebildet, während die Deckelwand 5 abnehmbar mit den Seitenwänden verbindbar ist.

Gemäß einem in der Zeichnung nicht dargestellten weiteren Ausführungsbeispiel könnte selbstverständlich auch die Bodenwand 2 wahlweise abnehmbar sein.

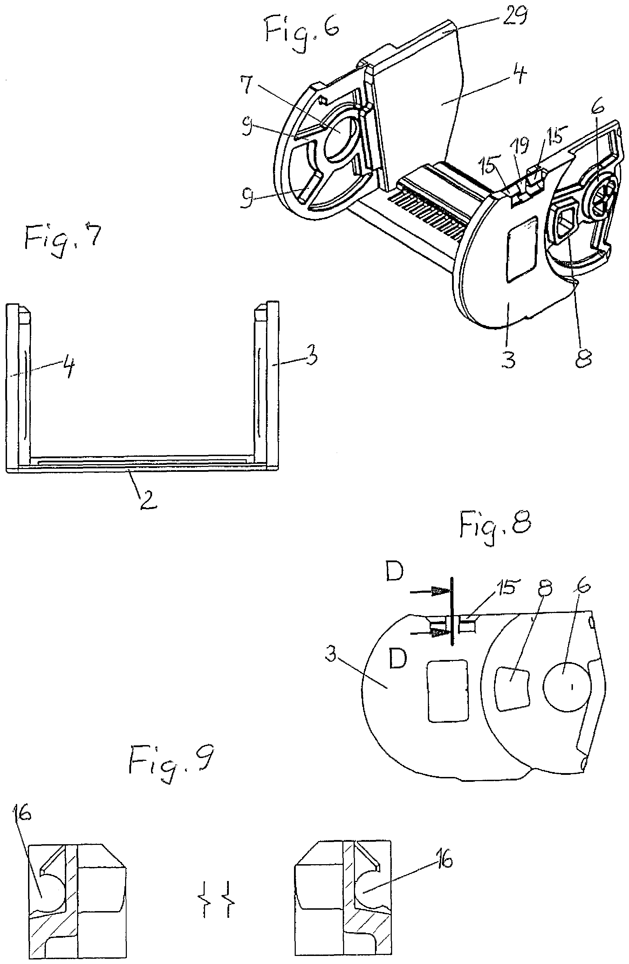

Wie insbesondere aus Fig. 6 hervorgeht, weisen die Seitenwände 3 und 4 jeweils an ihren Außenseiten einen Gelenkzapfen 6 und in einem Abstand von diesem an der Innenseite eine Gelenköffnung 7 auf. Bei der Montage der Gliederkette bzw. beim elastischen Ineinanderschieben der Kettenglieder 1 rasten die Gelenkzapfen 6 in die jeweilige Gelenköffnung 7 ein. Dadurch entsteht eine gelenkige Verbindung zwischen den benachbarten Kettengliedern 1. Der Verschwenkwinkel der Kettenglieder 1 relativ zueinander ist in beiden Richtungen durch Anschläge 8 begrenzt, die an den jeweiligen Außenseiten der Seitenwände 3 und 4 angeordnet sind und mit entsprechenden Gegenanschlägen 9, die an den Innenflächen der Seitenwände 3 und 4 angeordnet sind, zusammenwirken.

Die Deckelwände 5, Seitenwände 3 und 4 und Bodenwände 2 benachbarter Kettenglieder 1 überlappen sich dabei über den gesamten vorgesehenen Verschwenkwinkel, so dass auch bei einem Richtungswechsel der Bewegung der Energieführungskette stets ein geschlossener Innenraum 10 für die in der Energieführungskette geführten Schläuche, Kabel und dergleichen gewährleistet ist.

Bei dem in der Zeichnung dargestellten Ausführungsbeispiel ist lediglich die Deckelwand 5 von dem aus den Seitenwänden 3 und 4 sowie der Bodenwand 5 bestehenden Kanal abnehmbar. Die Deckelwand 5 weist dabei auf jeder Seite eine Befestigungslasche 11 auf. Im montierten Zustand übergreifen die beiden Befestigungslaschen 11 die Seitenwände 3 und 4 an deren Außenflächen. Zur Fixierung der Deckelwand 5 an den Seitenwänden 3 und 4 sind an den den Außenflächen der Seitenwände 3 und 4 zugewandten Innenseiten der Befestigungslaschen 11 Rastelemente 12 vorgesehen, die mit an den Außenflächen der Seitenwände 3 und 4 ausgebildeten Gegenrastelementen 13 zusammenwirken.

Die an den Innenflächen der Befestigungslaschen 11 vorgesehenen Rastelemente 12 sind als nach innen gegen die Seitenwände 3 und 4 gerichtete Vorsprünge 14 ausgebildet. Die an den Außenflächen der Seitenwände 3 und 4 angeordneten Gegenrastelemente weisen die Form vorspringender Rastnasen 15 auf. Die Rastverbindung entsteht dann dadurch, dass die an den Befestigungslaschen 11 ausgebildeten Vorsprünge 14 unter leichter elastischer Verformung der Befestigungslaschen 11 über die Rastnasen 15 schnappen.

Die an den Befestigungslaschen 11 vorgesehenen Vorsprünge 14 sind an den unteren Enden der Befestigungslaschen 11 angeordnet und sind kreiszylindrisch ausgebildet. Unterhalb der an den Außenflächen der Seitenwände 3 und 4 vorgesehenen Rastnasen 15 sind nach außen offene, hohlzylindrische Aufnahmeräume 16 vorgesehen, deren Innendurchmesser dem Außendurchmesser der kreiszylindrischen Vorsprünge 14 entspricht.

Im eingeschnappten Zustand der entsprechenden Deckelwand 5 sind die kreiszylindrischen Vorsprünge 14 nach Art eines Scharniers in den hohlzylindrischen Aufnahmeräumen 16 gelagert. Die jeweilige Deckelwand 5 kann dann wie ein Klappdeckel sowohl zur einen als auch zur anderen Seite aufgeklappt und wieder geschlossen werden.

Um Sicherzustellen, dass beim Aufklappen der Deckelwand diese fest in der jeweiligen Seitenwand verankert bleibt, ist der äußere Öffnungsbereich 17 der hohlzylindrischen Aufnahmeräume 16 geringfügig kleiner ausgebildet als der Außendurchmesser der kreiszylindrischen Vorsprünge 14.

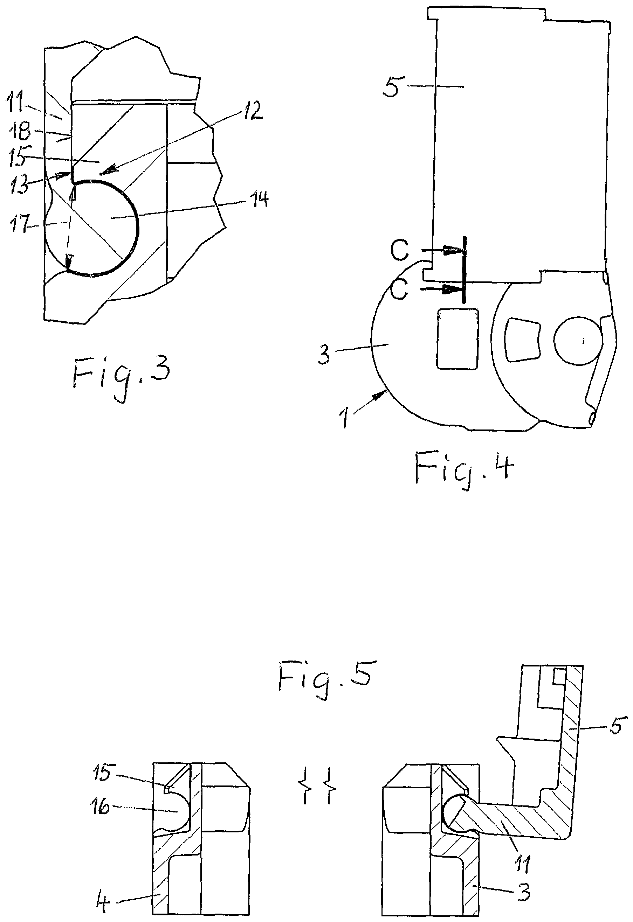

Wie insbesondere aus den Figuren 2 und 3 zu erkennen ist, ist die Rastverbindung zwischen den Seitenwänden 3 und 4 und der Deckelwand 5 in einem zurückversetzten Bereich 18 der Außenfläche der jeweiligen Seitenwand 3 bzw. 4 ausgebildet. Der zurückversetzte Bereich 18 der jeweiligen Seitenwand 3 bzw. 4 ist dabei so bemessen, dass die Außenseite der jeweiligen Befestigungslasche 11 im eingeschnappten Zustand der Rastverbindung bündig mit der Außenfläche der jeweiligen Seitenwand 3 bzw. 4 abschließt. Durch diese Maßnahme entsteht beim Zusammenfügen der einzelnen Kettenglieder 1 eine glatte Außenfläche der Energieführungskette.

Der scharnierartige Eingriff der an den Befestigungslaschen 11 vorgesehenen kreiszylindrischen Vorsprünge 14 in die an den Seitenwänden 3 und 4 vorgesehenen hohlzylindrischen Aufnahmeräume 16 ist äußerst stabil und zuverlässig. Um eine zusätzliche Sicherung gegen Querverschiebung zu gewährleisten, sind die an den Seitenwänden 3 und 4 vorgesehenen Rastnasen 15 in ihrem mittleren Bereich mit einer Ausnehmung bzw. Unterbrechung 19 versehen, wie insbesondere aus den Figuren 6 und 8 hervorgeht. Oberhalb der an der Deckelwand 5 angeordneten kreiszylindrischen Vorsprünge 14 ist jeweils eine Rippe 20 ausgebildet, die im eingerasteten Zustand der Deckelwand 5 formschlüssig in die jeweilige Unterbrechung 19 der Rastnase 15 eingreift.

Das Schließen der Deckelwände 5 nach dem Einlegen der Schläuche, Kabel und dergleichen in die Energieführungskette wird dadurch erleichtert, dass die Befestigungslaschen 11 mit seitlichen Schrägflächen 21 versehen sind, die mit entsprechenden Einführungsschrägen 22, die an den Seitenwänden 3 und 4 vorgesehen sind, zusammenwirken.

Im eingeschnappten Zustand der Rastverbindung sitzen die Deckelwände 5 äußerst relativ fest an den Kettengliedern 1. Um das Öffnen der Deckelwände 5 zu erleichtern, ist etwa im mittleren Bereich der an den Befestigungslaschen 11 angeordneten kreiszylindrischen Vorsprünge 14 je eine Ausnehmung 23 vorgesehen. Diese ist mindestens so breit, dass man das Arbeitsende eines Schraubendrehers ansetzen und damit die Deckelwand 5 aufhebeln kann.

Zu dem gleichen Zweck ist an dem unteren Rand des nach außen offenen Bereichs des jeweiligen hohlzylindrischen Aufnahmeraums 16 eine entsprechende Ausnehmung von mindestens der Breite des Arbeitsendes eines Schraubendrehers vorgesehen. Wie insbesondere in Fig. 1 zu erkennen ist, sind die beiden Ausnehmungen 23 und 24 im eingerasteten Zustand der Deckelwand 6 unmittelbar übereinander angeordnet, so dass man die jeweilige Deckelwand 5 bequem mit Hilfe eines Schraubendrehers auf einer Seite aufhebeln kann, um die Deckelwand 5 einseitig aufzuklappen.

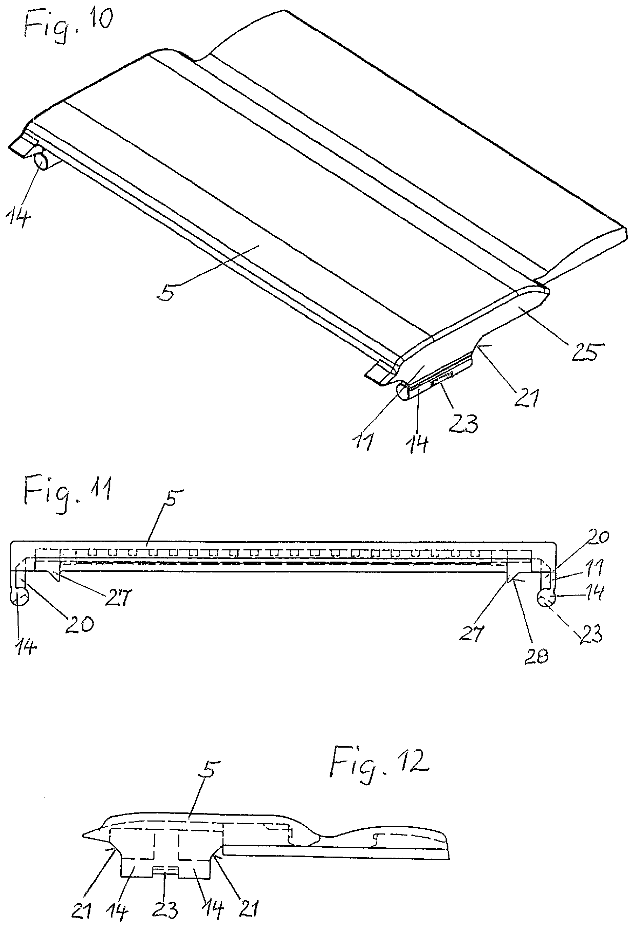

Die an die Befestigungslaschen 11 angrenzenden seitlichen Ränder 25 der Deckelwand 5 schließen außen bündig mit der Außenfläche der jeweiligen Seitenwand 3 bzw. 4 ab. Der in Fig. 1 und 10 veranschaulichte jeweilige seitliche Rand 25 liegt dabei genau in der Ebene des im montierten Zustand der Energieführungskette außenliegenden Bereichs der in Fig. 1 dargestellten Seitenwand 3. Der in Fig. 1 dargestellte rechte, etwas zurück versetzte Bereich 26 wird im fertig montierten Zustand der Energieführungskette von der jeweiligen Seitenwand des folgenden Kettengliedes überlappt, so dass nach außen hin eine glatte Fläche der Energieführungskette entsteht.

Wie insbesondere aus den Figuren 2 und 11 hervorgeht, weisen die sich an die Befestigungslasche 11 anschließende seitlichen Ränder der Deckelwand 5 einen nach unten gerichteten Flansch 27 auf, der über seine gesamte Länge mit einer Abschrägung 28 versehen ist. An den oberen Kanten der Seitenwände 3 und 4 ist eine entsprechende Gegenschräge 29 ausgebildet, wie insbesondere aus Fig. 6 hervorgeht. Im aufgesetzten und eingerasteten Zustand der Deckelwand 5 liegt dabei die Abschrägung 28 der Deckelwand 5 fest und bündig an der Gegenschräge 29 an, so dass dadurch eine gute Führung der Deckelwand 5 auf den oberen Rändern der Seitenwände 3 und 4 erzielt wird sowie eine zusätzliche Abdichtung des Innenraums (10) der Energieführungskette entsteht.

### Bezugzeichenliste

- 1: Kettenglieder
- 2: Bodenwand
- 3: Seitenwand
- 4: Seitenwand
- 5: Deckelwand
- 6: Gelenkzapfen
- 7: Gelenköffnung
- 8: Anschläge
- 9: Gegenanschläge
- 10: geschlossener Innenraum
- 11: Befestigungslasche
- 12: Rastelemente
- 13: Gegenrastelemente
- 14: kreiszylindrische Vorsprünge
- 15: Rastnasen
- 16: hohlzylindrischer Aufnahmeraum
- 17: äußerer Öffnungsbereich des Aufnahmeraums 16
- 18: zurückversetzter Bereich
- 19: Unterbrechung
- 20: Rippe
- 21: seitliche Schrägen
- 22: Einführungsschrägen
- 23: Ausnehmung an den Vorsprüngen 14
- 24: Ausnehmung an den Aufnahmeräumen 16
- 25: seitliche Ränder
- 26: zurückversetzter Bereich
- 27: nach unten gerichteter Flansch
- 28: Abschrägung des Flansch 27
- 29: Gegenschräge an den Seitenwänden

## Patentansprüche

1. Energieführungskette zur Führung von Kabeln, Schläuchen und dergleichen zwischen zwei relativ zueinander beweglichen Anschlussstellen, bestehend aus einer Mehrzahl von gelenkig miteinander verbundenen aus Kunststoff gefertigten Kettengliedern (1), die je eine Bodenwand (2), sich daran anschließende, gegenüberliegende Seitenwände (3), und eine Deckelwand (5) aufweisen, wobei die Deckelwand (5) abnehmbar mit den Seitenwänden (3, 4) verbunden bzw. verbindbar ist, die Seitenwände (3, 4) jeweils einen Gelenkzapfen (6) und eine Gelenköffnung (7) zur gelenkigen Verbindung benachbarter Kettenglieder (1) aufweisen, der Verschwenkwinkel in beiden Verschwenkrichtungen durch Anschläge (8) begrenzt ist, die Deckelwand (5) auf jeder Seite mindestens je eine Befestigungslasche (11) aufweist, die Befestigungslaschen (11) die Seitenwände (3, 4) an deren Außenflächen übergreifen, an den den Außenflächen der Seitenwände (3, 4) zugewandten Innenseiten der Befestigungslaschen (11) Rastelemente (12) vorgesehen sind und an den Außenflächen der Seitenwände (3, 4) Gegenrastelemente (13) ausgebildet sind, die mit den Rastelementen (12) der Befestigungslaschen (11) zusammenwirken, **dadurch gekennzeichnet, dass** die Deckelwände (5), Seitenwände (3, 4) und Bodenwände (2) benachbarter Kettenglieder (1) sich über den gesamten Verschwenkwinkel gegenseitig überlappen, dass die Rastelemente (12) und Gegenrastelemente (13) auf beiden Seiten der Energieführungskette ein Scharnier bilden, dass die Rastverbindung zwischen den Seitenwänden (3, 4) und der Deckelwand (5) in einem zurückversetzten Bereich (18) der Außenfläche der jeweiligen Seitenwand (3, 4) ausgebildet ist und dass der zurückversetzte Bereich (18) der jeweiligen Seitenwand (3, 4) so bemessen ist, dass die Außenseite der Befestigungslasche (11) im eingeschnappten Zustand der Rastverbindung bündig mit der Außenfläche der jeweiligen Seitenwand (3, 4) abschließt.

2. Energieführungskette nach Anspruch 1, **dadurch gekennzeichnet, dass** die an den Innenflächen der Befestigungslaschen (11) vorgesehenen Rastelemente (12) als nach innen gegen die Seitenwände (3, 4) gerichtete Vorsprünge (14) ausgebildet sind, dass die an den Außenflächen der Seitenwände (3, 4) angeordneten Gegenrastelemente (13) die Form vorspringender Rastnasen (15) aufweisen und dass die Rastverbindung dadurch entsteht, dass die Vorsprünge (14) der Befestigungslaschen (11) über die Rastnasen (15) schnappen.

3. Energieführungskette nach Anspruch 2, **dadurch gekennzeichnet, dass** die Vorsprünge (14) an den unteren Enden der Befestigungslaschen (11) angeordnet und kreiszylindrisch ausgebildet sind, dass unterhalb der an den Außenflächen der Seitenwände (3, 4) vorgesehenen Rastnasen (15) nach außen offene hohlzylindrische Aufnahmeräume (16) vorgesehen sind, deren Innendurchmesser dem Außendurchmesser der kreiszylindrischen Vorsprünge (14) entsprechen, und dass die Vorsprünge (14) im eingeschnappten Zustand der entsprechenden Deckelwand (5) nach Art eines Scharniers in den hohlzylindrischen Aufnahmeräumen (16) der Seitenwände (3, 4) gelagert sind.

4. Energieführungskette nach Anspruch 3, **dadurch gekennzeichnet, dass** der äußere Öffnungsbereich (17) der Aufnahmeräume (16) geringfügig kleiner ist als der Durchmesser der kreiszylindrischen Vorsprünge (14).

5. Energieführungskette nach einem der Ansprüche 2 bis 4, **dadurch gekennzeichnet, dass** die an den Seitenwänden (3, 4) vorgesehenen Rastnasen (15) in ihrem mittleren Bereich eine Unterbrechung (19) aufweisen, dass oberhalb der an der Deckelwand (5) angeordneten kreiszylindrischen Vorsprünge (14) eine Rippe (20) ausgebildet ist und dass die Rippe (20) im eingerasteten Zustand der Deckelwand (5) formschlüssig in die jeweilige Unterbrechung (19) der Rastnase (15) eingreift.

6. Energieführungskette nach einem der Ansprüche 1 bis 5, **dadurch gekennzeichnet, dass** die Befestigungslaschen (11) mit seitlichen Schrägen (21) versehen sind, die beim Schließen der Deckelwand (5) mit an den Seitenwänden (3, 4) vorgesehenen Einführschrägen (22) zusammenwirken.

7. Energieführungskette nach einem der Ansprüche 2 bis 6, **dadurch gekennzeichnet, dass** etwa im mittleren Bereich der an den Befestigungslaschen (11) angeordneten kreiszylindrischen Vorsprünge (14) eine Ausnehmung (23) von mindestens der Breite des Arbeitsendes eine Schraubendrehers vorgesehen ist.

8. Energieführungskette nach einem der Ansprüche 2 bis 7, **dadurch gekennzeichnet, dass** an dem unteren Rand des nach außen offenen Bereichs des hohlzylindrischen Aufnahmeraums 16 eine Ausnehmung (24) von mindestens der Breite des Arbeitsendes eines Schraubendrehers vorgesehen ist.

9. Energieführungskette nach einem der Ansprüche 1 bis 8, **dadurch gekennzeichnet, dass** die an die Befestigungslaschen (11) angrenzenden seitlichen Ränder (25) der Deckelwand (5) außen bündig mit der Außenfläche der jeweiligen Seitenwand (3, 4) abschließen.

10. Energieführungskette nach einem der Ansprüche 1 bis 9, **dadurch gekennzeichnet, dass** die sich an die Befestigungslaschen (11) anschließenden seitlichen Ränder (25) der Deckelwand einen nach unten gerichteten Flansch (27) aufweisen, dass der Flansch über seine Länge mit einer Abschrägung (28) versehen ist und dass an den oberen Kanten der Seitenwände (3, 4) eine entsprechende Gegenschräge (29) ausgebildet ist, an der die entsprechende Abschrägung (28) der Deckelwand (5) im eingerasteten Zustand bündig anliegt.

## Claims

1. An energy guiding chain for guiding cables, hoses and the like between two connecting points moveable relative to each other, comprising a plurality of chain links (1) which are connected to each other in articulated fashion and made of plastic and each of which has a bottom wall (2), adjoining opposite side walls (3, 4), and a cover wall (5), wherein the cover wall (5) is or can be detachably connected to the side walls (3, 4), the side walls (3, 4) each have a pivot pin (6) and a joint opening (7) for the articulated connection of adjacent chain links (1), the pivoting angle is limited by stops (8) in both pivoting directions, the cover wall (5) has at least one fastening tab (11) on each side, the fastening tabs (11) engage over the side walls (3, 4) at the outer surfaces thereof, snap-in elements (12) are provided at the insides of the fastening tabs (11) facing towards the outer surfaces of the side walls (3, 4), mating snap-in elements (13) are provided on the outer surfaces of the side walls (3, 4), interacting with the snap-in elements (12) of the fastening tabs (11), **characterised in that** the cover walls (5), side walls (3, 4) and bottom walls (2) of adjacent chain links (1) overlap over the entire pivoting angle, the snap-in elements (12) and mating snap-in elements (13) form a hinge on both sides of the energy guiding chain, the snap-in connection between the side walls (3, 4) and the cover wall (5) is provided in a recessed region (18) of the outer surface of the respective side wall (3, 4), and the recessed region (18) of the respective side wall (3, 4) is dimensioned in such a way that in the snapped-in state of the snap-in connection the outside of the fastening tab (11) terminates flush with the outer surface of the respective side wall (3, 4).

2. An energy guiding chain according to claim 1 **characterised in that** the snap-in elements (12) provided on the inner surfaces of the fastening tabs (11) are in the form of projections (14) pointing inwards towards the side walls (3, 4), the mating snap-in elements (13) located on the outer surfaces of the side walls (3, 4) are in the form of projecting snap-in lugs (15), and the snap-in connection is created by the projections (14) of the fastening tabs (11) snapping over the snap-in lugs (15).

3. An energy guiding chain according to claim 2 **characterised in that** the projections (14) are located at the lower ends of the fastening tabs (11) and are of circular-cylindrical design, outwardly open hollow-cylindrical receptacles (16) whose inside diameter corresponds to the outside diameter of the circular-cylindrical projections (14) are provided below the snap-in lugs (15) provided at the outer surfaces of the side walls (3, 4), and in the snapped-in state of the corresponding cover wall (5) the projections (14) are mounted in the hollow-cylindrical receptacles (16) of the side walls (3, 4) in the manner of a hinge.

4. An energy guiding chain according to claim 3 **characterised in that** the outer opening region (17) of the receptacles (16) is slightly smaller than the diameter of the circular-cylindrical projections (14).

5. An energy guiding chain according to one of claims 2 to 4 **characterised in that** the middle region of the snap-in lugs (15) provided on the side walls (3, 4) has an interruption (19), a rib (20) is provided above the circular-cylindrical projections (14) located on the cover wall (5), and in the snapped-in state of the cover wall (5) the rib (20) positively lockingly engages into the respective interruption (19) in the snap-in lug (15).

6. An energy guiding chain according to one of claims 1 to 5 **characterised in that** the fastening tabs (11) are provided with lateral bevels (21) which interact with insertion bevels (22) provided on the side walls (3, 4) when closing the cover wall (5).

7. An energy guiding chain according to one of claims 2 to 6 **characterised in that** a recess (23) of at least the width of the working end of a screwdriver is provided approximately in the middle region of the circular-cylindrical projections (14) located on the fastening tabs (11).

8. An energy guiding chain according to one of claims 2 to 7 **characterised in that** a recess (24) of at least the width of the working end of a screwdriver is provided at the lower edge of the outwardly open region of the hollow-cylindrical receptacle (16).

9. An energy guiding chain according to one of claims 1 to 8 **characterised in that** the lateral edges (25) of the cover wall (5), that adjoin the fastening tabs (11), terminate externally flush with the outer surface of the respective side wall (3, 4).

10. An energy guiding chain according to one of claims 1 to 9 **characterised in that** the lateral edges (25) of the cover wall (5), that adjoin the fastening tabs (11), have a downwardly pointing flange (27), the flange (27) is provided with a bevel (28) over its length, and a corresponding mating bevel (29) is formed at the upper edges of the side walls (3, 4), against which the corresponding bevel (28) of the cover wall (5) lies flush in snapped-in state.

## Revendications

1. Chaîne de guidage d'énergie pour guider des câbles, tuyaux et analogues entre deux points de raccordement mobiles l'un par rapport à l'autre, constituée d'une pluralité de maillons de chaîne (1) reliés entre eux de manière articulée et en matière plastique, lesquels maillons de chaîne présentent chacun une paroi de base (2), des parois latérales opposées adjacentes (3) et une paroi de recouvrement (5), la paroi de recouvrement (5) étant ou pouvant être reliée de manière amovible aux parois latérales (3, 4), les parois latérales (3, 4) présentent chacune un goujon articulé (6) et une ouverture d'articulation (7) pour la liaison articulée de maillons de chaîne (1) voisins, l'angle de pivotement étant limité dans les deux sens de pivotement par des butées (8), la paroi de recouvrement (5) présentant au moins une patte de fixation (11) sur chaque côté, les pattes de fixation (11) chevauchant les parois latérales (3, 4) sur leur surfaces extérieures, des éléments de verrouillage (12) étant prévus aux côtés intérieurs faisant face aux surfaces extérieures des parois latérales (3, 4), et des élément de verrouillage correspondants (13), qui interagissent avec les éléments de verrouillage (12) des pattes de fixation (11), étant formés sur les surfaces extérieures des parois latérales (3, 4), **caractérisé en ce que** les parois de recouvrement (5), les parois latérales (3, 4) et les parois de base (2) des maillons de chaîne (1) adjacents se chevauchent sur tout l'angle de pivotement, **en ce que** les éléments de verrouillage (12) et les éléments de verrouillage correspondants (13) forment une charnière des deux côtés de la chaîne de guidage d'énergie, **en ce que** la liaison de verrouillage entre les parois latérales (3, 4) et la paroi de recouvrement (5) est formée dans une zone en retrait (18) de la surface extérieure de la paroi latérale correspondante (3, 4) et **en ce que** la zone en retrait (18) de la paroi latérale respective (3, 4) est **en ce que** la zone en retrait (18) de la paroi latérale correspondante est dimensionnée de telle sorte que l'extérieur de la patte de fixation (11) est à fleur de la surface extérieure de la paroi latérale respective (3, 4) à l'état verrouillé de l'assemblage de verrouillage.

2. Chaîne de guidage d'énergie selon la revendication 1, **caractérisé en ce que** les éléments de verrouillage (12) prévus sur les surfaces intérieures des pattes de fixation (11) sont réalisés sous forme de saillies (14) dirigées vers l'intérieur vers les parois latérales (3, 4), **en ce que** les éléments de verrouillage (13) correspondants disposés sur les surfaces extérieures des parois latérales (3, 4) ont la forme de nez de verrouillage (15) saillants et que la liaison par verrouillage est réalisée par les saillies (14) des pattes de fixation (11) se verrouillant sur les nez de verrouillage (15).

3. Chaîne de guidage d'énergie selon la revendication 2, **caractérisé en ce que** les saillies (14) sont disposées aux extrémités inférieures des pattes de fixation (11) et sont de forme cylindrique circulaire, **en ce que** des espaces de réception cylindriques creux (16) ouverts vers l'extérieur sont prévus sous les nez de verrouillage (15) prévus sur les surfaces extérieures des parois latérales (3,4), dont le diamètre intérieur correspond au diamètre extérieur des saillies cylindriques circulaires (14), et **en ce que** les saillies (14) sont montées à l'état encliqueté de la paroi de recouvrement correspondante (5) à la manière d'une charnière dans les logements cylindriques creux (16) des parois latérales (3, 4).

4. Chaîne de guidage d'énergie selon la revendication 3, **caractérisé en ce que** la zone d'ouverture extérieure (17) des espaces de réception (16) est légèrement inférieure au diamètre des saillies cylindriques circulaires (14).

5. Chaîne de guidage d'énergie selon l'une des revendications 2 à 4, **caractérisé en ce que** les nez de verrouillage (15) prévus sur les parois latérales (3, 4) présentent une interruption (19) dans leur zone centrale, **en ce qu'**une nervure (20) est formée au-dessus des saillies cylindriques circulaires (14) disposées sur la paroi de recouvrement (5), et **en ce que** la nervure (20) est en engagement positif dans l'interruption respective (19) du nez de verrouillage (15) à l'état engagé de la paroi de recouvrement (5).

6. Chaîne de guidage d'énergie selon l'une des revendications 1 à 5, **caractérisé en ce que** les pattes de fixation (11) sont pourvues de pentes latérales (21) qui, lorsque la paroi de recouvrement (5) est fermée, coopèrent avec les pentes d'insertion (22) prévues sur les parois latérales (3,4).

7. Chaîne de guidage d'énergie selon l'une des revendications 2 à 6, **caractérisé en ce qu'**un évidement (23) d'au moins la largeur de l'extrémité de travail d'un tournevis est prévu approximativement dans la région centrale des saillies cylindriques circulaires (14) disposées sur les pattes de fixation (11).

8. Chaîne de guidage d'énergie selon l'une des revendications 2 à 7, **caractérisée** en ce **caractérisé en ce qu'**un évidement (24) d'au moins la largeur de l'extrémité de travail d'un tournevis est prévu sur le bord inférieur de la zone ouverte vers l'extérieur de l'espace récepteur cylindrique creux (16).

9. Chaîne de guidage d'énergie selon l'une des revendications 1 à 8, **caractérisé en ce que** les bords latéraux (25) de la paroi de recouvrement (5) adjacents aux pattes de fixation (11) sont affleurants vers l'extérieur avec la surface extérieure de la paroi latérale (3, 4) correspondante.

10. Chaîne de guidage d'énergie selon l'une des revendications 1 à 9, **caractérisé en ce que** les bords latéraux (25) de la paroi de recouvrement adjacents aux pattes de fixation (11) présentent une bride (27) dirigée vers le bas, **en ce que** la bride est munie sur sa longueur d'un chanfrein (28), et **en ce que** sur les bords supérieurs des parois latérales (3, 4) est formé un contre chanfrein correspondant (29) contre lequel le chanfrein (28) de la paroi (5) du recouvrement est à fleur dans l'état engagé.
